# EUROPEAN PATENT SPECIFICATION

(11) **EP 1 830 623 B1**
(45) Date of publication and mention of the grant of the patent: **16.05.2012**
(21) Application number: 05855074.0
(22) Date of filing: 22.12.2005
(51) Int. Cl.: A01D 34/90, A01M 7/00, A01D 34/00

(54) **COMBINATION BLOWER AND HERBICIDE SPRAYING DEVICE**
KOMBINATIONSGEBLÄSE- UND HERBIZIDSPRITZVORRICHTUNG
DISPOSITIF COMBINÉ SOUFFLEUSE-PULVÉRISATEUR D'HERBICIDE

(30) Priority: 22.12.2004 US 639155 P
(43) Date of publication of application: 12.09.2007
(73) Proprietor: Loaces, Francisco B., Concord, NC 28027 (US)
(72) Inventor: Loaces, Francisco B., Concord, NC 28027 (US)
(74) Representative: Sherrard-Smith, Hugh
(86) International application number: PCT/US2005/046451
(87) International publication number: WO 2006/069185

(56) References cited:
- US-A- 5 106 020
- US-A1- 2003 221 400
- US-A1- 2004 255 564
- US-B1- 6 409 097

## Description

### Technical Field and Background of the Invention

This application claims the benefit of U.S. Provisional Application No. 60/639, 155, filed December 22, 2004.

US6,409,097 discloses a blower having a dry material feed system fixed to a tube section of the blower to introduce dry material into a lair flow. Additionally, a liquid feed system may be provided which is secured to the dry material feed hopper.

US2004/0255564 discloses a strimmer having a spraying device with a nozzle being positioned at an angle so that the liquid is dispensed from a nozzle in a predetermined direction away from the apparatus.

The invention relates to an apparatus that can perform grounds maintenance functions such as leaf blowing, and also dispense a fluid composition such as a herbicide. The invention is particularly suited for large landscaping projects that require a worker to cover long distances. The invention combines the function of a motorized grounds maintenance tool, such as a leaf blower, with the related function of herbicide dispensing, thereby eliminating the need for the worker to make two trips over the same area. Motorized leaf blowers, powered by gas or electricity, are commonly used in grounds maintenance projects. In addition, the use of pesticides, such as herbicides, fungicides and insecticides, are commonly used to eliminate and prevent unwanted vegetation and insects. A landscaper will often use a leaf blower in a certain area, and then have to return to the same area to dispense pesticide using a separate spraying apparatus. Typically, this requires the landscaper to perform the blowing operation, return the grounds maintenance tool to a truck or other location where the pesticide dispensing equipment is retrieved, and then travel along the same area again with the pesticide dispensing equipment. The fact that landscaping work often requires commercial landscapers to walk significant distances exacerbates the inconvenience and inefficiency created by having to travel the same area twice.

### Summary of the Invention

Therefore it is an object of the present invention to provide a lawn maintenance apparatus that can function as a leaf blower and can also dispense a fluid, such as a herbicide, fungicide, pesticide or insecticide.

Another object of the present invention is to provide an apparatus having a spray wand for dispensing a stream of herbicide that enables the user to direct the stream of pesticide at a particular location.

These and other objectives of the present invention are achieved by providing A grounds maintenance apparatus comprising:
(a) a grounds maintenance device comprising a motorized leaf blower unit (11) adapted for being carried by a user, characterised in that the motorized leaf blower comprises a motor (25) carried on the back of a user;
(b) a spraying device (12) for spraying a fluid comprising:
   (i) a container mounted (24) on the grounds maintenance device for holding the fluid,
   (ii) and a spraying member in communication with the container for spraying the fluid, the spraying member moveable from a carrying position wherein the spraying member is carried on the grounds maintenance device to a spraying position wherein the spraying member is moveable independent of the grounds maintenance device;
(d) an air pump (13) in communication with the container (24) via a first fluid line (16) whereby the container is pressurized;
(e) a second fluid line (26) connecting the container and the spraying member; and
(f) a trigger (14) operatively connected to a valve positioned in the second fluid line whereby pressing the trigger opens the valve to allow the fluid to pass through the second fluid line and into the spraying member.

According to yet another preferred embodiment of the invention, the spraying member is a wand, and an elongate holder is mounted on the grounds maintenance device for carrying the wand.

According to yet another preferred embodiment of the invention, a motor is provided for powering the grounds maintenance device.

According to yet another preferred embodiment of the invention, a handle is attached to the grounds maintenance device for facilitating lifting and carrying of the apparatus by the user.

According to yet another preferred embodiment of the invention, is sized to hold approximately 1.2 liters (forty fluid ounces).

According to yet another preferred embodiment of the invention, the fluid includes one or more selected from the group consisting of a herbicide, fungicide, pesticide and insecticide.

According to yet another preferred embodiment of the invention, a strap is attached to the grounds maintenance device for aiding the user in carrying the apparatus.

### Brief Description of the Drawings

Figure 1 is a side elevation of a Combination Blower and Herbicide Spraying Device, according to a preferred embodiment of the invention;
Figure 2 is a perspective view of the Combination Blower and Herbicide Spraying Device of Fig. 1 ;
Figure 3 is another perspective view of the Combination Blower and Herbicide Spraying Device of Fig. 1 ;
Figure 4 is an environmental view showing the Combination Blower and Herbicide Spraying Device of Fig. 1 in use;
Figure 5 is another environmental view showing the Combination Blower and Herbicide Spraying Device of Fig. 1 in use;
Figure 6 is a partial side elevation of a Combination Blower and Herbicide Spraying Device, according to another preferred embodiment of the invention;
Figure 7 is an environmental view showing a Combination weed trimmer and Herbicide Spraying Device not in accordance with the present invention;
Figure 8 is another environmental view showing the Combination weed trimmer and Herbicide Spraying Device not in accordance with the present invention ;
Figure 9 is an environmental view of a Combination edger and Spraying Device not in accordance with the present invention ; and

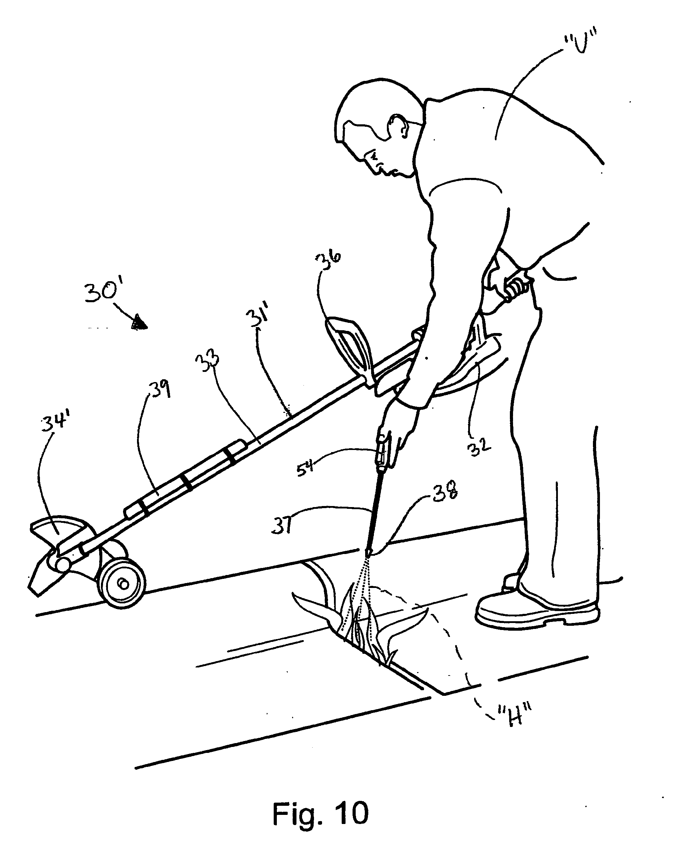

Figure 10 is another environmental view showing the Combination edger and Herbicide Spraying Device not in accordance with the present invention.

### Description of the Invention

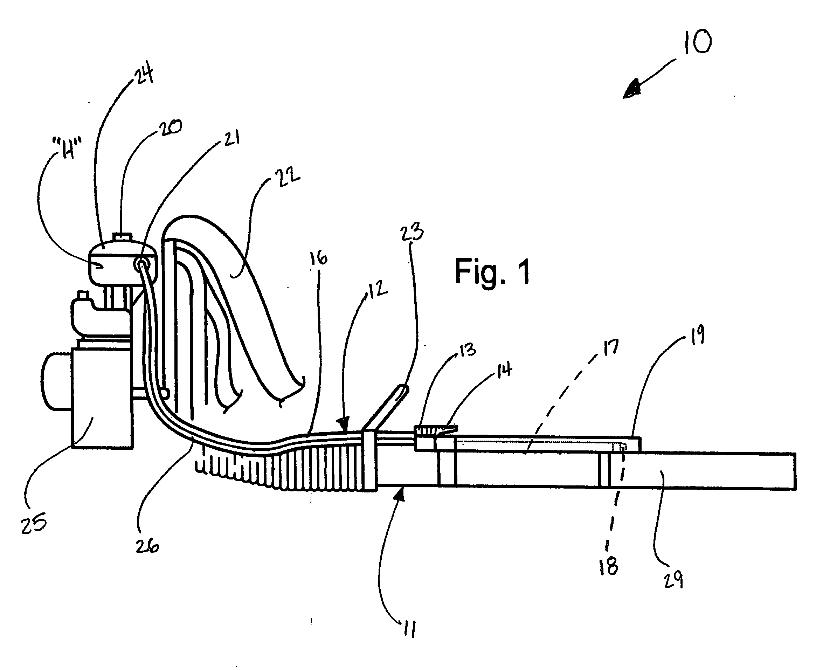

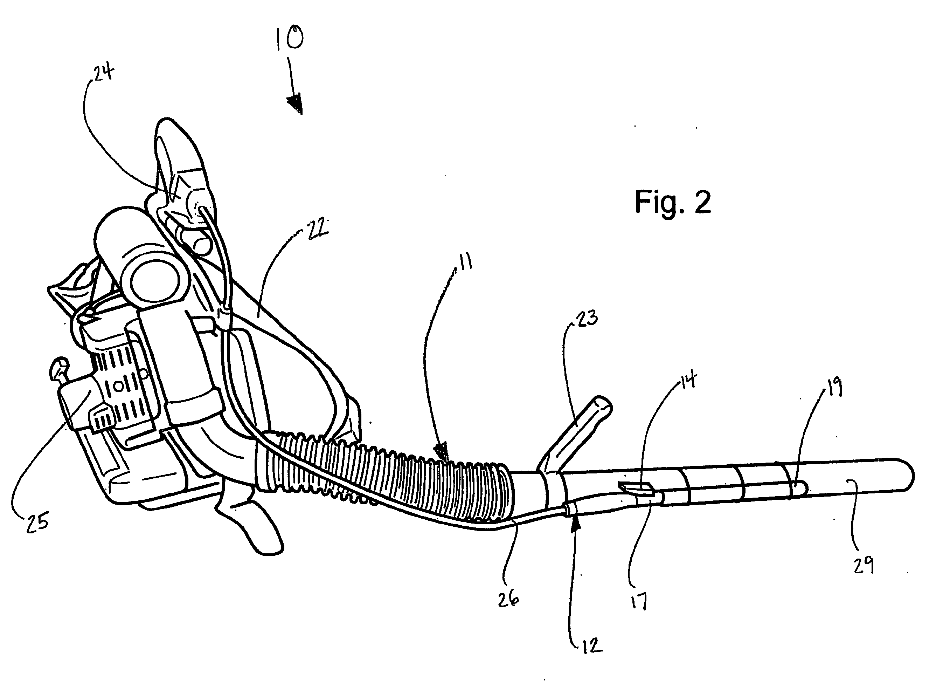

Referring now specifically to the drawings, a landscaping and fluid dispensing apparatus according to a preferred embodiment of the invention is illustrated in Figures 1-5, and shown generally at reference numeral 10. The apparatus 10 generally comprises a spraying device attachment 12 mounted on a grounds maintenance device, such as a leaf blower 11 of the type that is carried on the back of the user "U". The spraying device 12 can spray a variety of fluids, including fluids used in landscaping operations, such as liquid herbicides, fungicides, pesticides, insecticides, water and fertilizer. The sprayer 12 is preferably used to spray a liquid herbicide such as ROUNDUP weed killer.

As shown in Figure 1, the sprayer 12 includes a container 24 for holding the liquid herbicide "H". Preferably, the container 24 is sized to contain forty fluid ounces. A fill cap 20 is positioned at the top of the container 24, which can be removed to pour the herbicide into the container 24. The fill cap 20 is held on the container 24 by threaded engagement or other appropriate means.

The container 12 has a one way valve 21 that communicates with a pressurized fluid line 16 and an air pump 13 that pressurizes the container 12. A second fluid line 26 communicates with the container 24 and a spraying member, such as a spray wand 17. It should be noted that other devices, such as a spray gun, can be used as the spraying member. A trigger 14 is operatively connected to a release valve 15 positioned in the fluid line 16. By pressing the trigger 14, the release valve 15 opens to release the desired amount of herbicide through fluid line 26, thereby delivering a stream of herbicide to spray wand 17 and out spray tip 18.

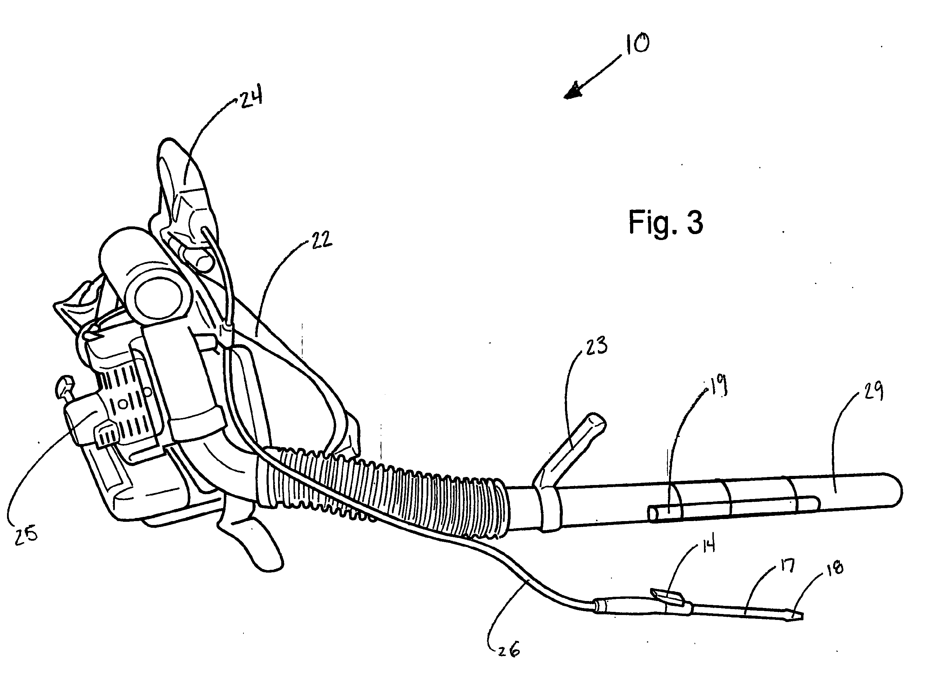

The spray wand 17 can be contained within a holster-like apparatus, such as wand holder 19, as shown in Figures 1-2. The spray wand 17 can be removed from the wand holder 19, as shown in Figure 3, and moved independently of the leaf blower 11 in any direction.

The leaf blower 11 includes a motor unit 25 for generating and blowing a stream of air through an exit tube 29. A strap 22 is provided for the user "U" to position on his shoulder for carrying the motor unit 25 on his back, and a handle 23 is mounted on the blower 11 for carrying the apparatus 10.

The apparatus 10 enables a user "U" to selectively spray a particular weed or weeds on a sidewalk, curb, or parking lot while using the blower 11 in the same area. Such is the typical routine that a landscaping company regularly performs on each job site. The apparatus 10 enables the user to avoid re-walking over the same area that would otherwise have to be re-walked when using a prior art back-pack sprayer or hand-held sprayer.

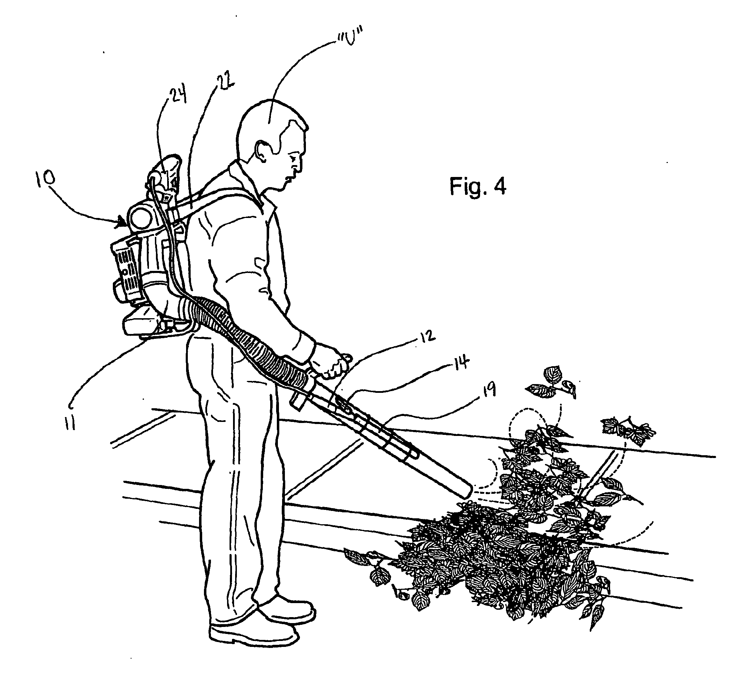

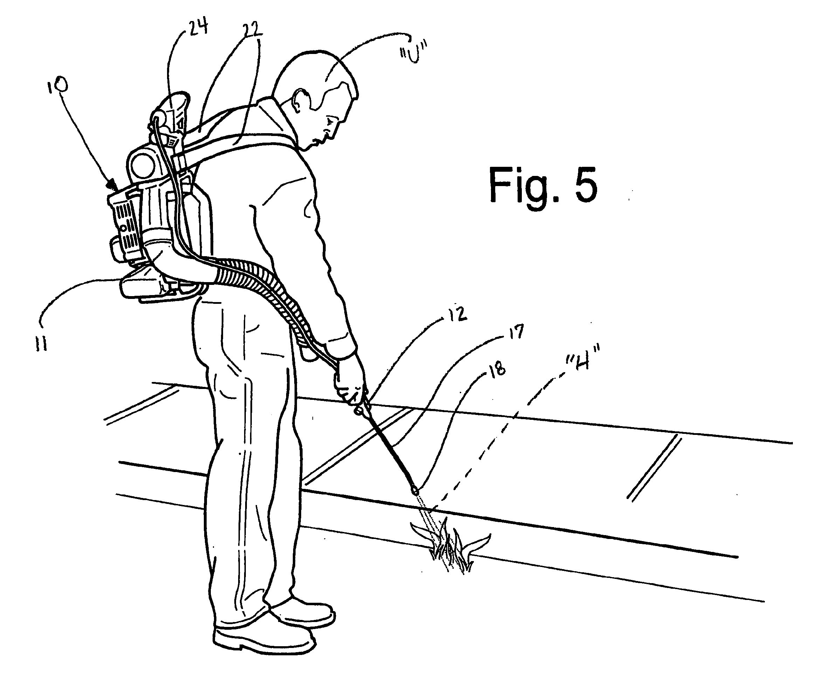

Figures 4 and 5 illustrate a preferred method of using the apparatus 10. When the invention is used to blow leaves, as illustrated in Figure 4, the spray wand 17 is maintained in a carrying position in which the wand 17 is contained within the holder 19. When the user "U" desires to spray herbicide "H", the wand 17 is removed from the holder 19, as shown in Figure 5. The user "U" points the wand 17 at the location at which he desires to spray herbicide, and then engages the trigger 14 to release herbicide "H" from the spray tip 18.

The removable spray wand 17 enables the user "U" to precisely spray the herbicide "H" at particular locations, without having to point and direct the entire apparatus 10. Furthermore, the ability to point the spray wand 17 away from the end of the blower 11 eliminates the risk of air from the blower 11 blowing herbicide into unwanted locations, such as desirable vegetation or the user "U" himself. This results in a safer and more ergonomic method over the prior art.

The invention substantially increases efficiency for landscaping operations by enabling the user "U" to blow leaves and grass clippings off sidewalks, curbs and parking lots, and spray herbicide with a single apparatus. As such, work time is substantially reduced as the user need not travel twice over the same landscaping route as in prior operations that require workers to blow leaves and grass clippings separately from spraying. The invention enables the user to accomplish in one trip what previously required two. Accordingly, the invention improves efficiency by reducing the amount of labor time required with prior art devices, and reducing the amount of wasted materials by providing precise, targeted spraying. Furthermore, the invention improves safety by minimizing the risk of the user's exposure to dangerous materials.

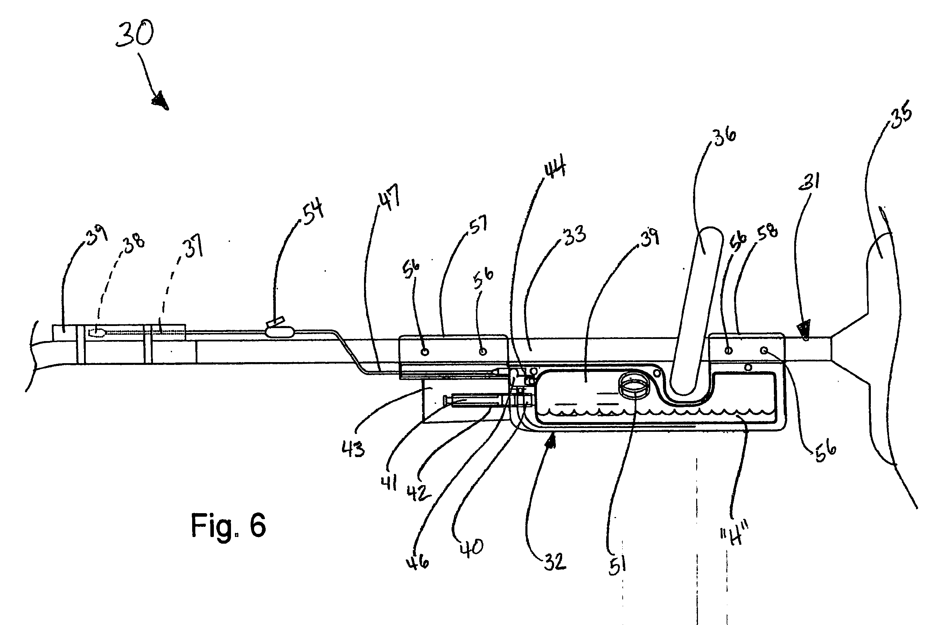

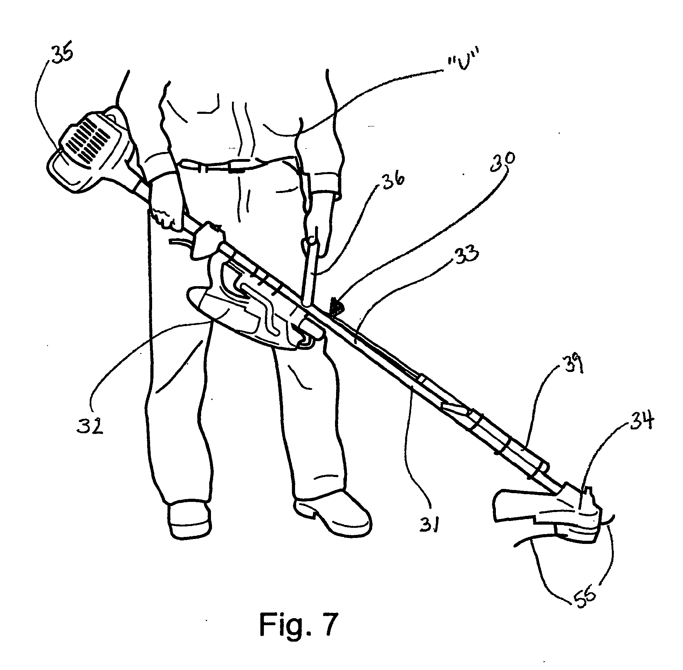

In Figures 6-8the apparatus 30 generally comprises a grounds maintenance device such as a motorized weed trimmer 31 , and a sprayer 32. The weed trimmer 31 includes an arm 33 with proximal and distal ends. A weed trimmer head piece 34 is mounted at the distal end of the arm 33, as shown in Figure 7. The head piece 34 includes a rotatable string 55, preferably made of nylon, plastic or other suitable material, for cutting weeds and other unwanted vegetation. A motor 35 is mounted at the proximal end of the arm 33, and is operatively connected to the head piece 34 to drive the rotatable string 55. The motor 35 can be powered by gas, electricity or other suitable energy source. A handle 36 is mounted on the arm 33 proximate the proximal end.

The sprayer 32 is attached to the arm 33 via mounting supports 57, 58. Each mounting support 57, 58 defines apertures 56 for receiving a fastener, such as a screw, that engages the arm 33. The sprayer 32 comprises a container 39 for holding a desired fluid, such as a liquid herbicide "H". It should be noted that other liquid compositions having agricultural and/or botanical purposes, such as liquid fertilizers, can be stored in the container 39 and used in conjunction with the invention. As shown in Figure 6, the container 39 includes an indenture to conform around the handle 36. Preferably, the container 39 is sized to hold approximately 0.6 liters (twenty fluid ounces).

The container 39 includes a first opening that communicates with an input port 40. A piston 41 is positioned within a pump tube 42 that communicates with the input port 40. A hand actuator 43 is positioned and operatively connected to the piston 41. By grasping and moving the actuator 43 back and forth the piston 41 is moved forcing air through the input port 40 and into the container 39 in order to pressurize the container 39.

As shown in Figure 6, the container 39 includes a second opening positioned above the first opening. The second opening communicates with a discharge outlet 44. A pick-up hose 45 is positioned within the discharge outlet 44 for facilitating withdrawal of herbicide "H" from the container 39. A valve 46 is also positioned within the discharge outlet 44 for controlling the flow of liquid out of the discharge outlet 44. An elongate fluid line 47 is connected to the discharge outlet 44 at one end, and a spraying member, such as a spray wand 37, at the other end.

A trigger 54 is positioned at the junction of the fluid line 47 and the wand 37, and is operatively connected to the valve 46. Pressing the trigger 54 opens the valve 46 to allow the pressurized herbicide "H" within the container 39 to flow through the discharge outlet 44 and into the fluid line 47. The herbicide "H" flows through the fluid line 47, into the spray wand 37, and is dispensed out of the wand of herbicide "H" from the container 39. A valve 46 is also positioned within the discharge outlet 44 for controlling the flow of liquid out of the discharge outlet 44. An elongate fluid line 47 is connected to the discharge outlet 44 at one end, and a spraying member, such as a spray wand 37, at the other end.

A trigger 54 is positioned at the junction of the fluid line 47 and the wand 37, and is operatively connected to the valve 46. Pressing the trigger 54 opens the valve 46 to allow the pressurized herbicide "H" within the container 39 to flow through the discharge outlet 44 and into the fluid line 47. The herbicide "H" flows through the fluid line 47, into the spray wand 37, and is dispensed out of the wand tip 38. By pressing the trigger 54, the desired amount of herbicide can be dispensed from the wand 37.

The length of the fluid line 47 is adjustable, and the fluid line 47 preferably extends a substantial length of the arm 33 to allow for the container 39 to be positioned proximate the handle 36 near the proximal end of the arm 33, and the tip 38 of the wand 37 to be positioned proximate the distal end of the arm 33, as shown in Figure 6. By positioning the container 39 proximate the handle 36, the substantial weight of the liquid filled container 39 can be more easily borne by the user and greater control can be exercised over the apparatus 30.

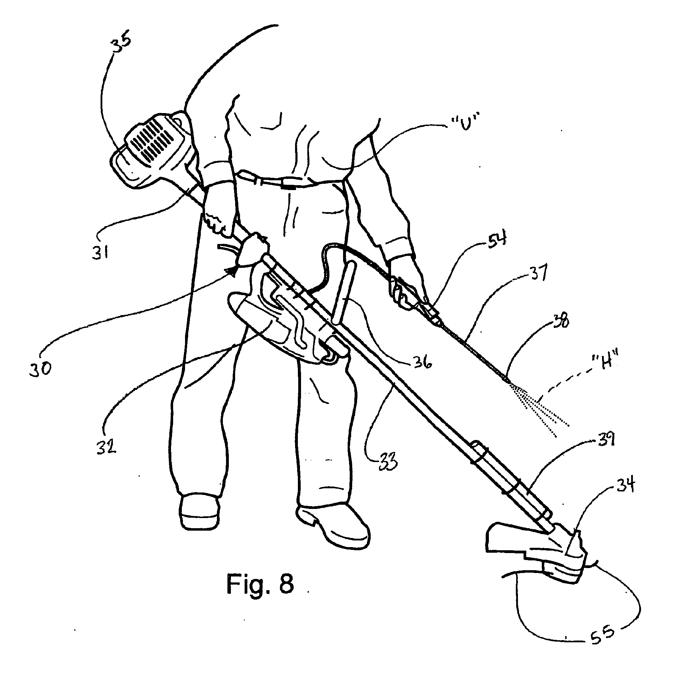

The spray wand 37 can be contained within a holster-like apparatus, such as wand holder 39, as shown in Figure 6. The spray wand 37 can be removed from the wand holder 39, as shown in Figure 8, and moved independently of the weed trimmer 31 in any direction.

The container 39 has a third opening that is covered by a fill cap 51. The fill cap 51 is held on the container 39 by threaded engagement or other appropriate means. To fill the container 39 with the desired liquid, the fill cap 51 is removed and the liquid is poured through the third opening.

As shown in Figures 7 and 8, the apparatus 30 is operable in two modes- a weed trimming mode and a liquid dispensing mode. When operated in the weed trimming mode, shown in Figure 7, the user "U" operates the weed trimmer 31 to cut weeds and other vegetation as desired, and the spray wand 37 is maintained within the holder 39. When the user "U" desires to dispense a liquid, such as a pesticide, herbicide, fungicide, insecticide or fertilizer, the wand 37 is removed from the holder 39, and the user "U" points the wand 37 at the location at which he desires to spray herbicide "H", and then engages the trigger 54 to release herbicide "H" from the spray tip 38.

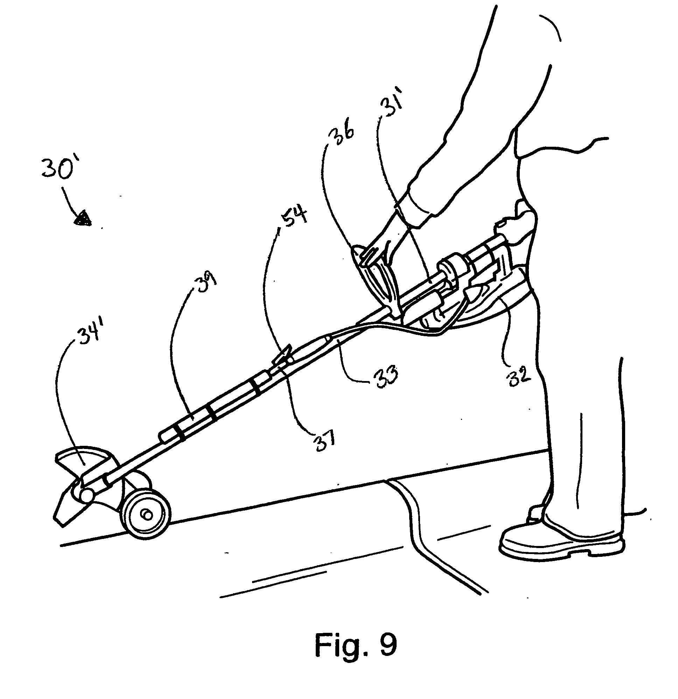

In Figures 9 and the apparatus 30' is the same in all significant aspects as the previously described embodiment, apparatus 30, except that apparatus 30' is adapted for use with an edger 31', instead of the previously disclosed weed trimmer 31. Accordingly, the same reference numerals have been retained to denote those features that are the same in both apparatus 30 and apparatus 30'. The apparatus 30' includes a head piece 34' comprising an edging device. The edging device 34' is driven by the motor 35. The apparatus 30" is operated in a similar manner as the previously described apparatus 30.

A Combination Blower and Herbicide Spraying Device is described above. Various details of the invention may be changed without departing from its scope. Furthermore, the foregoing description of the preferred embodiment of the invention and the best mode for practicing the invention are provided for the purpose of illustration only and not for the purpose of limitation- the invention being defined by the claims.

## Claims

1. A grounds maintenance apparatus comprising:
(a) a grounds maintenance device comprising a motorized leaf blower unit (11) adapted for being carried by a user, **characterised in that** the motorized leaf blower comprises a motor (25) carried on the back of a user;
(b) a spraying device (12) for spraying a fluid comprising:
(i) a container mounted (24) on the grounds maintenance device for holding the fluid,
(ii) and a spraying member in communication with the container for spraying the fluid, the spraying member moveable from a carrying position wherein the spraying member is carried on the grounds maintenance device to a spraying position wherein the spraying member is moveable independent of the grounds maintenance device;
(d) an air pump (13) in communication with the container (24) via a first fluid line (16) whereby the container is pressurized;
(e) a second fluid line (26) connecting the container and the spraying member; and
(f) a trigger (14) operatively connected to a valve positioned in the second fluid line whereby pressing the trigger opens the valve to allow the fluid to pass through the second fluid line and into the spraying member.

2. An apparatus according to claim 1, wherein the spraying member comprises a wand (17), and further comprising an elongate holder (19) mounted on the grounds maintenance device having at least one opening for receiving the wand, wherein the wand is positioned within the holder when in the carrying position.

3. An apparatus according to claim 1, further comprising a handle attached to the grounds maintenance device for facilitating lifting and carrying of the apparatus by the user.

4. An apparatus according to claim 1, wherein the container is sized to hold approximately forty fluid ounces (1.2 liters).

5. An apparatus according to claim 1, further comprising a strap attached to the grounds maintenance device for aiding the user in carrying the motor on the back of the user.

6. An apparatus as claimed in any preceding claim in which the blowing unit comprises an elongate tube for dispensing a stream of air and in which the spraying member comprises a wand moveable from carrying position wherein the wand is carried on the elongated tube and a spraying position wherein the wand is movable independent of the leaf blower unit; and a holster attached to the elongate tube of the leaf blower unit for receiving and removably carrying the wand when in the carrying position, the holster comprising an enclosure shaped and sized to receive the wand, an open longitudinal end for inserting the wand therethrough and a closed longitudinal end covering a terminal end of the wand when in the carrying position.

7. An apparatus as claimed in claim 6 in which the second fluid line (26) is flexible in relation to the spraying want to allow for free movement of the spraying wand when in the spraying position, and the spraying wand is rigid in relation to the fluid line and adapted for being held in a hand of a user when in the spraying position.

8. An apparatus according to claim 7, further comprising a receiving member mounted on the leaf blower unit comprising an enclosure shaped and sized to substantially cover and carry the spraying member when in the carrying position and an opening for receiving the spraying member therethrough, wherein the receiving member covers the second end of the spraying member when in the carrying position.

9. A method of operating a ground spreader device as claimed in any preceding claim comprising blowing leaves with the motorized leaf blower and spraying fluid with the spraying member when the spraying member is in the spraying position by moving the spraying member independently from the maintenance device.

## Patentansprüche

1. Grundstückspflegegerät mit
(a) einer Grundstückspflegevorrichtung mit einer motorisierten Laubbläsereinheit (11), die geeignet ist, von einem Benutzer getragen zu werden, **dadurch gekennzeichnet, dass** der motorisierte Laubbläser einen von einem Benutzer auf dem Rücken getragenen Motor (25) umfasst,
(b) einer Sprühvorrichtung (12) zum Versprühen eines Fluids mit
(i) einem an der Grundstückspflegevorrichtung montierten Behälter (24) zur Aufnahme des Fluids und
(ii) einem mit dem Behälter in Verbindung stehenden Sprühelement zum Versprühen des Fluids, wobei das Sprühelement aus einer Trageposition, in der das Sprühelement an der Grundstückspflegevorrichtung getragen ist, in eine Sprühposition bewegbar ist, in der das Sprühelement unabhängig von der Grundstückspflegevorrichtung bewegt werden kann,
(c) einer Luftpumpe (13), die über eine erste Fluidleitung (16) mit dem Behälter (24) in Verbindung steht, wodurch der Behälter mit Druck beaufschlagt wird,
(d) einer zweien Fluidleitung (26), die den Behälter und das Sprühelement verbindet, und
(e) einem Abzug (14), der mit einem in der zweien Fluidleitung positionierten Ventil wirkverbunden ist, wodurch das Ventil durch Betätigung des Abzugs öffnet, so dass Fluid durch die zweite Fluidleitung und in das Sprühelement gehen kann.

2. Gerät nach Anspruch 1, wobei das Sprühelement einen Stab (17) umfasst, und ferner mit einem an der Grundstückspflegevorrichtung montierten länglichen Halter (19) mit mindestens einer Öffnung zur Aufnahme des Stabs, wobei der Stab im Halter positioniert ist, wenn er in der Trageposition ist.

3. Gerät nach Anspruch 1, ferner mit einem an der Grundstückspflegevorrichtung angebrachten Griff zum leichteren Heben und Tragen des Geräts durch den Benutzer.

4. Gerät nach Anspruch 1, wobei der Behälter so bemessen ist, dass er ungefähr 1,2 Liter (vierzig fluid ounces) aufnimmt.

5. Gerät nach Anspruch 1, ferner mit einem an der Grundstückspflegevorrichtung angebrachten Gurt zur Unterstützung des Benutzers beim Tragen des Motors auf dem Rücken.

6. Gerät nach einem der vorhergehenden Ansprüche, wobei die Blaseinheit ein längliches Rohr zur Ausgabe eines Luftstroms umfasst, und wobei das Sprühelement einen Stab umfasst, der sich von einer Trageposition, in der der Stab am länglichen Rohr getragen wind, in eine Sprühposition bewegten lässt, in der sich der Stab unabhängig von der Laubbläsereinheit bewegen lässt, sowie ein am länglichen Rohr der Laubbläsereinheit angebrachtes Halfter zum Aufnehmen und entfernbaren Tragen des Stabs, wenn er in der Trageposition ist, wobei das Halfter eine zur Aufnahme des Stabs gestaltete und bemessene Umfassung, ein offenes Längsende zum Einführen des Stabs und ein geschlossenes Längsende umfasst, das ein Abschlussende des Stabs abdeckt, wenn er in der Trageposition ist.

7. Gerät nach Anspruch 6, wobei die zweite Fluidleitung (26) bezüglich des Sprühstabs flexibel ist, damit sich der Sprühstab frei bewegten kann, wenn er in der Sprühposition ist, und der Sprühstab bezüglich der Fluidleitung starr und dazu geeignet ist, von einem Benutzer in der Hand gehalten zu werden, wenn er in der Sprühposition ist.

8. Gerät nach Anspruch 7, ferner mit einem an der Laubbläsereinheit montierten Aufnahmeelement mit einer Umfassung, die so gestaltet und bemessen ist, dass sie das Sprühelement im Wesentlichen abdeckt und trägt, wenn es in der Trageposition ist, und einer Öffnung zur Aufnahme des Sprühelements, wobei das Aufnahmeelement das zweite Ende des Sprühelements abdeckt, wenn es in der Trageposition ist.

9. Verfahren zum Betreiben einer Bodenausbreitvorrichtung nach einem der vorhergehenden Ansprüche mit den Schritten des Blasens von Laub mit dem motorisierten Laubbläser und des Sprühens von Fluid mit dem Sprühelement, wenn das Sprühelement in der Sprühposition ist, indem das Sprühelement unabhängig von der Pflegevorrichtung bewegt wird.

## Revendications

1. Appareil de l'entretien de terrain comprenant :
(a) un dispositif d'entretien de terrain comprenant une unité de souffleuse à feuilles motorisée (11) prévue pour être portée par un utilisateur, **caractérisé en ce qu** e la souffleuse à feuilles motorisée comprend un moteur (25) porté sur le dos d'un utilisateur ;
(b) u n dispositif pulvérisateur (12) pour pulvériser un fluide, comprenant :
(i) u n conteneur (24) monté sur le dispositif d'entretien de terrain pour retenir le fluide,
(ii) et un élément pulvérisateur communiquant avec le conteneur pour pulvériser le fluide, l'élément pulvérisateur pouvant être déplacé d' une position de transport, dans laquelle l'élément pulvérisateur est porté sur le dispositif d'entretien de terrain, dans un e position de pulvérisation, dans laquelle l'élément pulvérisateur peut être déplacé indépendamment du dispositif d'entretien de terrain ;
(c) une pompe à air (13) communiquant avec le conteneur (24) par le biais d'une première ligne de fluide (16), le conteneur étant de ce fait mis sous pression ;
(d) une deuxième ligne de fluide (26) reliant le conteneur et l'élément pulvérisateur ; et
(e) un dispositif de déclenchement (14) connecté fonctionnellement à une vanne positionnée dans la deuxième ligne de fluide, la pression du dispositif de déclenchement ouvrant la vanne pour permettre au fluide de passer à travers la deuxième ligne de fluide et jusque dans l'élément pulvérisateur.

2. Appareil selon la revendication 1, dans lequel l'élément pulvérisateur comprend un manche (17) et comprenant en outre un support allongé (19) monté sur le dispositif d'entretien de terrain, ayant au moins une ouverture pour recevoir le manche, le manche étant positionné dans le support dans la position de transport.

3. Appareil selon la revendication 1, comprenant en outre un e poignée attachée au dispositif d'entretien de terrain pour faciliter le levage et le transport de l'appareil par l'utilisateur.

4. Appareil selon la revendication 1, dans lequel le conteneur est dimensionné de manière à contenir approximativement quarante onces de fluides (1,2 litres).

5. Appareil selon la revendication 1, comprenant en outre un e sangle attachée au dispositif d'entretien de terrain pour faciliter le transport du moteur sur le dos de l'utilisateur.

6. Appareil selon l'une quelconque des revendications précédentes, dans lequel l'unité de souffleuse à feuilles comprend un tube allongé pour distribuer un flux d'air et dans lequel l'élément pulvérisateur comprend un manche déplaçable depuis une position de transport dans laquelle le manche est porté sur le tube allongé, dans une position de pulvérisation dans laquelle le manche peut être déplacé indépendamment de l'unité de souffleuse à feuilles ; et un fourreau attaché au tube allongé de l'unité de souffleuse à feuilles pour recevoir et transporter de manière amovible le manche dans la position de transport, le fourreau comprenant une enveloppe formée et dimensionnée de manière à recevoir le manche, une extrémité longitudinale ouverte pour insérer le manche à travers elle, et une extrémité longitudinale fermée recouvrant une extrémité terminale du manche dans la position de transport.

7. Appareil selon la revendication 6, dans lequel la deuxième ligne de fluide (26) est flexible par rapport au manche de pulvérisation de manière à permettre un mouvement libre du manche de pulvérisation dans la position de pulvérisation, et le manche de pulvérisation est rigide par rapport à la ligne de fluide et est prévu pour être tenu dans la main d'un utilisateur dans la position de pulvérisation.

8. Appareil selon la revendication 7, comprenant en outre un élément de réception monté sur l'unité de souffleuse à feuilles comprenant une enveloppe formée et dimensionnée de manière à recouvrir substantiellement et à porter l'élément pulvérisateur dans la position de transport et une ouverture pour recevoir l'élément pulvérisateur à travers elle, l'élément de réception recouvrant la deuxième extrémité de l'élément pulvérisateur dans la position de transport.

9. Procédé pour faire fonctionner un dispositif d'épandage au sol selon l'une quelconque des revendications précédentes, comprenant l'étape de soufflage de feuilles avec la souffleuse à feuilles motorisée et la pulvérisation de fluide avec l'élément pulvérisateur lorsque l'élément pulvérisateur est dans s la position de pulvérisation en déplaçant l'élément pulvérisateur indépendamment du dispositif d'entretien.
